# EUROPEAN PATENT SPECIFICATION

(11) **EP 2 873 503 B1**
(45) Date of publication and mention of the grant of the patent: **30.11.2016**
(21) Application number: 14189164.8
(22) Date of filing: 16.10.2014
(51) Int. Cl.: B29C 33/20, B29C 51/38, B30B 1/32, B29C 45/66

(54) **Forming apparatus**
Formungsvorrichtung
Appareil de formation

(30) Priority: 16.10.2013 IT MO20130291
(43) Date of publication of application: 20.05.2015
(73) Proprietor: C.M.S. S.p.A., 24019 Zogno (BG) (IT)
(72) Inventor: Villa, Giuseppe, 21100 Varese (IT)
(74) Representative: Villanova, Massimo

(56) References cited:
- EP-A2- 2 647 488
- US-A- 3 825 396
- US-A- 4 500 274
- US-A- 5 895 624
- US-A1- 2012 021 086
- DATABASE WPI Week 201053 Thomson Scientific, London, GB; AN 2010-J49747 XP002727781, -& CN 201 511 465 U (SUZHOU RED MAPLE WIND BLADE MOULD CO LTD) 23 June 2010 (2010-06-23)
- DATABASE WPI Week 201245 Thomson Scientific, London, GB; AN 2012-H18022 XP002727782, -& CN 202 238 422 U (SHENZHEN XINJITAI SPRAYER&PUMP CO LTD) 30 May 2012 (2012-05-30)

## Description

### Background of the invention

The invention relates to a forming apparatus, in particular a press-forming and/or thermoforming apparatus.

Specifically but not exclusively, the apparatus in question can be usefully used to form (draw) sheets, in particular sheets of thermoformable material, more in particular of composite plastics with reinforcing fibres.

In particular, reference is made to an apparatus made according to the preamble to the first claim. Such an apparatus is disclosed, for example, in patent publication EP 1878558.

EP-A-2 647 488 **discloses auxiliary mould portions arranged at the corners of the lower mould half to allow fine tuning to help overcoming the compression forces arising at the corners.** US-A-5 895 624 **discloses an apparatus for forming thick wall plastic sheets having formable decorative film layers wherein hooks and corresponding receivers sideways of mould halves are provided.** US-A-2012 021 086 **discloses a blade mould assembly with lockdown mechanism having a fastening rod engaging a protractile rod by a latching element.** CN-U-201 511 465 **discloses a clamping device for mould for eliminating manual labor during mounting of the device and ensuring clamping force.**

### Summary of the invention

One object of the invention is to provide a forming apparatus in which the (press-)forming force operating between two half moulds to form the workpiece is discharged, at least prevalently, on the half moulds and not on the frame of the apparatus.

One advantage is to make a forming apparatus that is able to generate a great press-forming force between the half moulds, for example of the order of 100 tonnes, as part of an overall relatively light apparatus structure.

One advantage is to provide a forming apparatus that is rapidly and easily adaptable to half moulds of different sizes.

One advantage is to create a forming apparatus with two half mould-holding tables in which each table has a mounting plane that can be completely exploited to fix the corresponding half mould.

One advantage is to make available a constructionally simple and cheap forming apparatus.

Such objects and advantages and yet others are all achieved by the apparatus according to one or more of the claims set out below.

In one example, a (press-)forming apparatus comprises two tables for receiving two respective half moulds, the two tables being movable towards one another in a motorised manner as far as a relative coupling position in which at least one hooking element arranged on a table can engage (removably) an end of at least one traction bar or rod arranged on the other table, the (press-)forming force between the two half moulds being generated by the traction force implemented by at least one hydraulic actuator, arranged on one table or the other to pull the traction rod.

### Brief description of the drawings

The invention can be better understood and implemented with reference to the enclosed drawings that illustrate an embodiment thereof by way of non-limiting example.
Figure 1 shows a perspective view of an embodiment of a forming apparatus made according to the invention, in an operating configuration in which the tables are in a relative coupling position and are ready for coupling.
Figure 2 is the view of figure 1 with the tables coupled.
Figure 3 is a view of the apparatus of figure 1, with the half moulds mounted on the tables, with some parts removed to show others better, in a configuration in which the parts are spaced apart from one another.
Figures 4 to 7 are side views in a vertical elevation, of four steps in an operating sequence of the apparatus of figure 1.

### Detailed description

With reference to the aforesaid figures, overall with 1 a forming apparatus, in particular a press-forming and/or thermoforming apparatus has been indicated, which can be used, specifically but not exclusively, for forming (for example by drawing) sheets of thermoformable plastics, in particular composite material containing self-reinforcing fibres.

The forming apparatus 1 comprises a frame 2, an (upper) first table 3 and a (lower) second table 4 for receiving, respectively, a first half mould S1 and a second half mould S2 for forming an workpiece by pressing. At least one or the other of the two tables, or each of the two tables, (for example the first table 3 and/or the second table 4), is movable with respect to the frame 2.

The forming apparatus 1 may comprise means (not shown) for heating the workpiece before pressing. The forming apparatus 1 may be associated with a heating apparatus (not shown) arranged next to the forming apparatus for preheating the workpiece that will then be transferred to the pressing station.

The forming apparatus 1 comprises first driving means for driving relative movements of the two tables 3 and 4 in relation to one another. It is possible to provide, for example, for at least the (upper) first table 3 being (vertically) movable with respect to the frame 2, at the command of the first driving means, that may comprise, for example, at least one translating device 5, for example a translating device with a mechanism of the screw and nut screw (ball screw) type. The first driving means may comprise, in particular, two or more translating devices 5. In the specific example four translating devices 5 are arranged.

It is possible to provide, for example, for also the (lower) second table 4 being (vertically) movable with respect to the frame 2, for example at the command of two or more (four) (screw and nut screw) translating devices 5.

The forming apparatus 1 may comprise (static and linear) guiding means with which at least the table that is movable in relation to the frame is slidably coupled.

The guiding means may comprise a plurality of (vertical) longitudinal elements that are integral with the frame 2, in particular a plurality of columns 8, for example at least three columns (four in the specific case), with each of which at least one first sliding guiding element (for example a first bush 9) is slidingly coupled that is integral with the first table 3 and at least one second sliding guiding element (for example a second bush 10) is slidingly coupled that is integral with the second table 4.

The guiding means may be arranged laterally outside a peripheral edge of the movable table and/or laterally outside a zone of the movable table intended for receiving the corresponding half mould.

The forming apparatus 1 comprises second driving means for exerting a press-forming force (which is relatively high, for example greater than 10 tonnes, or greater than 50 tonnes) between the two tables 3 and 4 that is suitable for forming the workpiece by pressing.

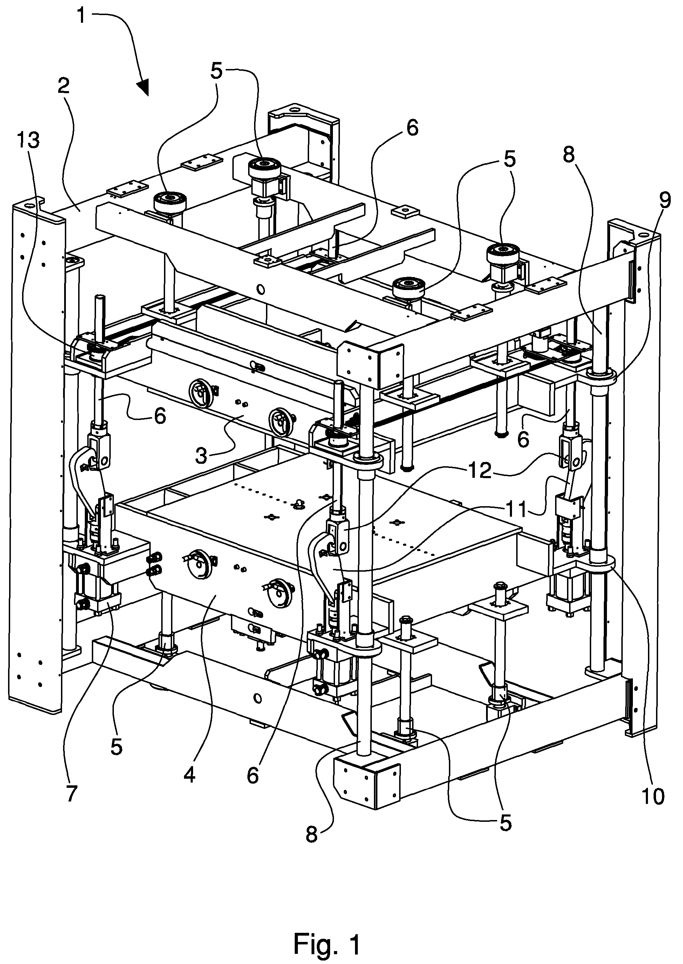

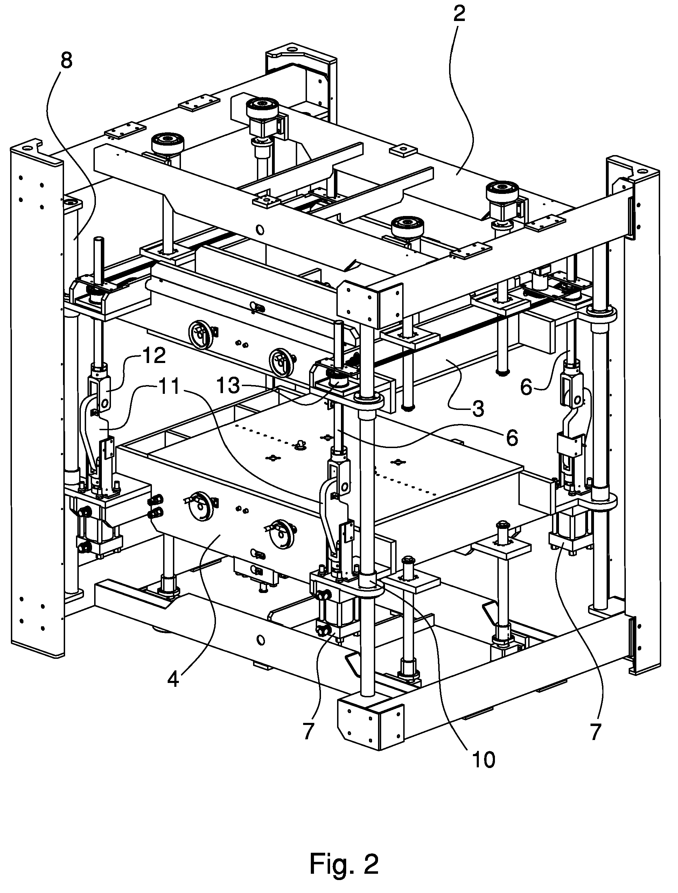

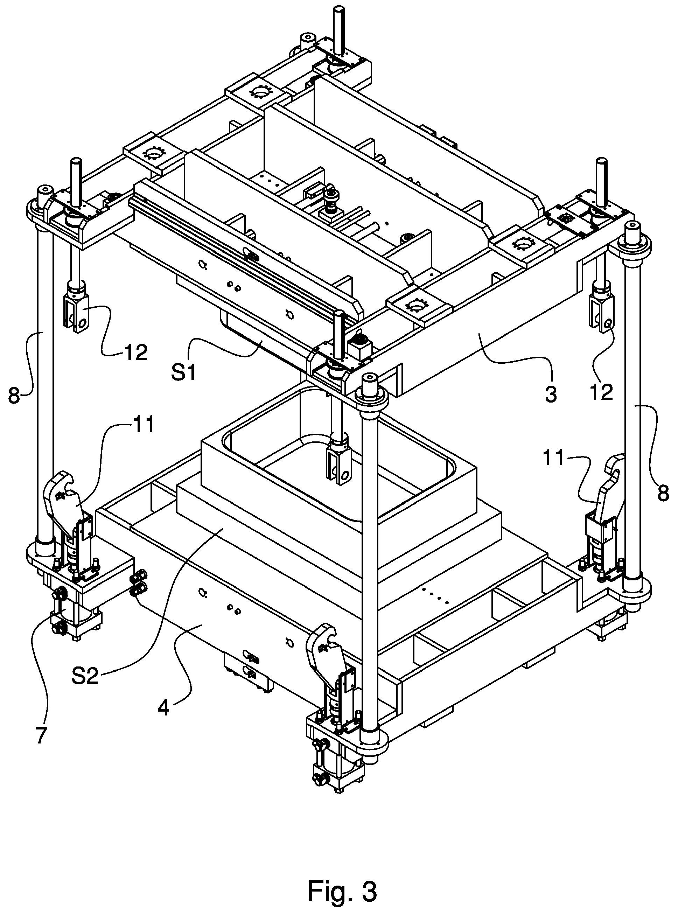

The second driving means may comprise a first part arranged on a table and a second part arranged on the other table. The first part and the second part are able to be removably interlocked. The first part and the second part of the second driving means are separated from one another when the two tables are spaced away from one another (figure 3) and are couplable with one another when the first driving means moves the two tables towards one another in a relative coupling position (figures 1 and 2), as will be explained better below.

The first part of the second driving means may comprise, in particular, at least one traction bar or rod 6 mounted on the first table 3. The second part of the second driving means may comprise, in particular, at least one traction actuator 7 mounted on the second table 4.

The second part of the second driving means may comprise at least one hooking element 11 arranged for coupling with the aforesaid first part. Each hooking element 11 may have the possibility of adopting an engagement position (figure 2) in which it hooks the aforesaid first part when the two tables 3 and 4 are in the relative coupling position, and a disengagement position (figure 1) in which it is unhooked from the first part. The movement of each hooking element 11 between the engagement and disengagement positions may be driven, in particular, by the respective (hydraulic) traction actuator 7.

The movement of each hooking element 11 between the engagement and disengagement positions may comprise, for example, a rotation around a pin.

The first part of the second driving means may comprise, as in this specific case, a hooking zone 12 for receiving a respective hooking element 11. This hooking zone 12 may be at a (lower) end of a corresponding traction bar or rod 6. This hooking zone 12 may be, for example, of the pin on fork type, or of the ring or eyebolt type, or of yet another type.

In the specific example, each hooking element 11 (for example in the form of a single hook) may move from the disengagement position to the engagement position (for example by a rotation) so as to enter into an opening defined by the hooking zone 12 (for example the opening defined by a pin and fork, or by the ring or eye bolt, etc) to then hook the traction rod 6 and then start to pull back the traction rod 6 by driving the respective traction actuator 7.

Each traction rod 6 may be mounted on the first table 3 with the possibility of performing, at the command of motor means, movements in the direction of the longitudinal axis thereof, so as to be able to adjust the relative position thereof in relation to the first table 3. In particular, each traction rod 6 (with vertical longitudinal axis) may be moved by a (vertical) motor-driven axis, for example using a brushless motor 13, or other type of motor. Adjusting the (vertical) position of the traction rod 6 enables the system to be adapted to different sizes of the half moulds, so that each hooking element 11 on a table can meet the respective hooking zone 12 (carried by the rod 6) on the other table, whatever the size (height) of the half moulds attached to the tables.

Each table may comprise a central portion intended for receiving the corresponding half mould and may, further, comprise at least one shelf portion protruding in a cantilevered manner from the aforesaid central portion. Each first part of the second driving means and/or each second part of the second driving means may be mounted on a shelf portion of the respective table.

The first part of the second driving means may comprise a plurality, for example at least three (four in the specific case), traction rods 6 on the first table 3. The second part of the second driving means may comprise a plurality, for example at least three (four in the specific case), traction actuators 7 on the second table 4. Each traction actuator 7 may be associated with a respective traction rod 6. Each traction actuator 7 may comprise, as in this example, a (hydraulic) fluid (linear) actuator. The maximum stroke of each traction actuator 7 may be less (less than two thirds, or less than half, or less than a third, or less than a quarter) of the maximum stroke of the translating devices 5 adjusting the position of each traction rod 6.

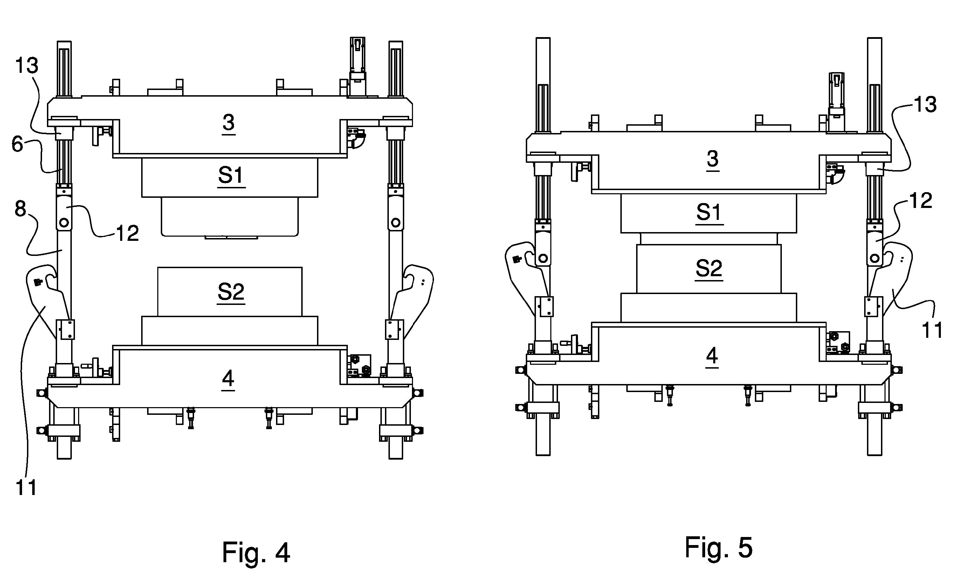

The operation of the apparatus 1 is disclosed starting with the configuration of figure 4, in which the tables with the corresponding half moulds are spaced apart from one another. The first movement means (screw-nut screw, for example ball screw, translating devices 5) approaches the tables each other to the coupling position (figure 5).

The traction rods 6 had been previously adjusted in the suitable position, (for example by the brushless motors 13), with respect to the table (first upper table 3) on which they are mounted, in function of the dimensions of the half moulds, so that each hooking zone 12 (on the lower end) of each traction rod 6 faces the respective hooking element 11 (for now in the disengagement position) at the correct relative position of the half moulds that have been brought towards one another.

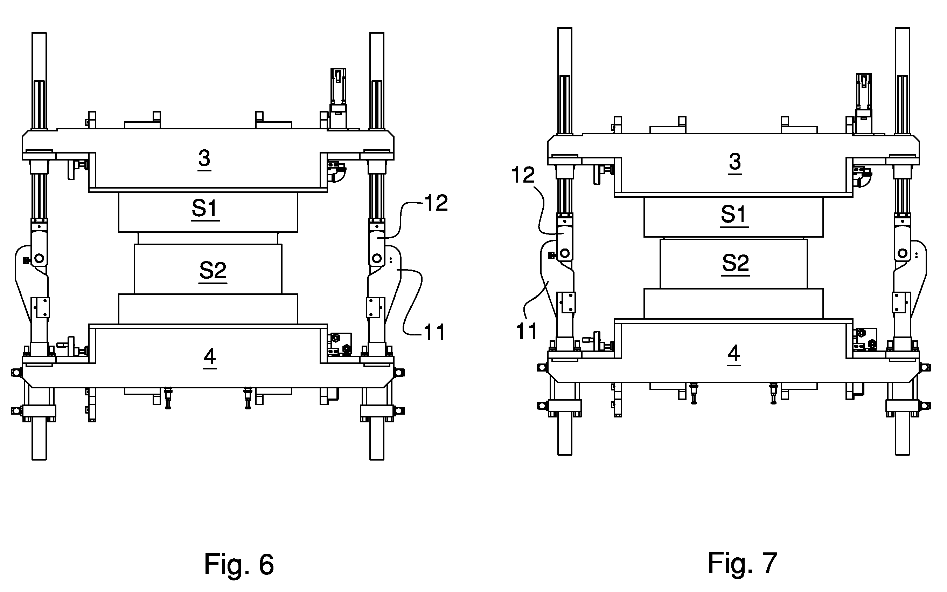

At this point the traction actuators 7 start to be driven to move, in an initial step of the stroke of traction actuators 7, the hooking elements 11 from the disengagement position to the engagement position (rotating around the pin thereof) to enter inside the respective hooking zones 12 on the traction rods 6 (figure 6).

The traction actuators 7 then continue to be driven (figure 7), so that in a subsequent step of the stroke of the traction actuators 7 the latter can pull the traction rods 6 (now connected to the actuators by the hooking system) so as to generate the compression force between the half moulds that is suitable for forming the workpieces being processed.

The apparatus may be provided with programmable electronic means (a numeric control system) to control the aforesaid operation.

It is possible to provide, as in the illustrated embodiment, for one of the two tables (in particular the table associated with the traction actuating means, in the specific case the lower second table 4) being substantially static with respect to the frame 2, whereas the other table (in particular the table associated with the passive tension rods arranged for being subjected to the traction exerted by the traction actuating means, in the specific case the first upper table 3) performs the adjustment movement during which the two tables move towards one another with the two parts of the locking and traction system still separated from one another.

The other (upper) table may further also perform the (relatively small) proper press-forming movement (with the two parts of the locking and traction system joined together) during which the press-forming force is generated operating between the two half moulds to form the workpiece (not shown). When the half moulds open, also the locking and traction system will open, in a reversible manner with respect to closure, and the two parts of the system will return to being separate.

The system enables a press-forming force to be generated between the two half moulds without discharging the force onto the frame. In fact, the press-forming force generated by the traction cylinders is discharged onto the half moulds. This press-forming force can be relatively high, in particular greater than 10 tonnes, for example of the order of 100 tonnes.

The table locking and traction system, like the table movement system, is arranged in a peripheral zone laterally outside the attachment plane of the half moulds, so as to leave free all the available space on the tables to mount the half moulds.

## Claims

1. Forming apparatus comprising:
- a frame (2);
- a first table (3) and a second table (4) for receiving respectively, a first half mould (S1) and a second half mould (S2) for forming a workpiece, at least one of said two tables being movable with respect to said frame;
- first driving means (5) for driving relative movements of said two tables in relation to one another;
- second driving means (6; 7) for exerting a force between said two tables that is suitable for forming the workpiece, said second driving means having a first part (6) mounted on one table and a second part (7) mounted on the other table, said first and second part being separated from one another when said two tables are at a distance from one another and being couplable together when said first driving means (5) brings said two tables towards one another in a relative coupling position;
wherein said first part comprises at least one traction rod (6) mounted on said first table (3) and said second part comprises at least one traction actuator (7) mounted on said second table (4).

2. Apparatus according to claim 1, comprising static and linear guiding means (8) with which said at least one table (3) that is movable with respect to the frame (2) is slidingly coupled.

3. Apparatus according to claim 2, wherein said guiding means comprises a plurality of columns (8), for example at least three or four columns, with each of which at least a first guiding bush (9) is slidably coupled that is integral with said first table (3) and at least a second guiding bush (10) is slidably coupled that is integral with said second table (4).

4. Apparatus according to claim 2 or 3, wherein said guiding means is arranged laterally outside a peripheral edge of said movable table (3) and/or laterally outside a zone of said movable table (3) that is intended to receive the half mould (S1) that is associable with said movable table.

5. Apparatus according to any preceding claim, wherein said second part comprises at least one hooking element (11) arranged for coupling with said first part, said hooking element (11) having the possibility of adopting an engagement position wherein it can hook said first part when the two tables (3; 4) are in said relative coupling position, and a disengagement position wherein it is unhooked from said first part, the movement of said hooking element (11) between said engagement and disengagement positions being driven by said at least one traction actuator (7).

6. Apparatus according to claim 5, wherein the movement of said hooking element (11) between said engagement and disengagement positions comprises at least one rotation around a pin.

7. Apparatus according to claim 5 or 6, wherein said first part comprises a hooking zone (12) for receiving said hooking element (11), said hooking zone being at one end of said traction rod (6), said hooking zone (12) being of the pin on fork type, or of the ring or eyebolt type.

8. Apparatus according to any preceding claim, wherein said at least one traction rod (6) is mounted on said first table (3) with the possibility of driven movement in the direction of its longitudinal axis so as to adjust the relative position thereof with respect to said first table (3).

9. Apparatus according to any preceding claim, wherein each of said two tables (3; 4) comprises a central portion that is intended to receive the corresponding half mould (S1; S2) and at least one shelf portion protruding in a cantilevered manner from said central portion, each of said first and second part (6; 7) being mounted on the shelf portion of the respective table.

10. Apparatus according to any preceding claim, wherein said first part comprises a plurality of, for example at least three or four, traction rods (6) on said first table (3), and wherein said second part comprises a plurality, for example at least three or four, traction actuators (7) on said second table (4), each traction actuator being associated with a respective traction rod.

11. Use of an apparatus according to any preceding claim for thermoforming with drawing of sheets made of composite thermoformable plastic with reinforcing fibres.

## Patentansprüche

1. Formungsvorrichtung, aufweisend:
- einen Rahmen (2);
- einen ersten Tisch (3) und einen zweiten Tisch (4), um jeweils eine erste Formhälfte (S1) und eine zweite Formhälfte (S2) zur Formung eines Werkstücks aufzunehmen, wobei mindestens einer der beiden Tische in Bezug auf den Rahmen beweglich ist;
- erste Antriebsmittel (5), um Relativbewegungen der beiden Tische in Bezug zueinander zu fahren;
- zweite Antriebsmittel (6; 7), um eine Kraft zwischen den beiden Tischen auszuüben, welche geeignet ist, das Werkstück zu formen, wobei die zweiten Antriebsmittel ein erstes Teil (6) aufweisen, das an einen Tisch montiert ist, und ein zweites Teil (7) aufweisen, das an dem anderen Tisch montiert ist, wobei das erste von dem zweiten Teil getrennt ist, wenn die beiden Tische voneinander beabstandet sind und miteinander kuppelbar sind, wenn die ersten Antriebsmittel (5) die beiden Tische in eine relative Kupplungsposition zueinander bringen;
wobei das erste Teil zumindest eine Zugstange (6) aufweist, die an den ersten Tisch (3) montiert ist, und wobei das zweite Teil zumindest einen Zugaktuator (7) aufweist, der an den zweiten Tisch (4) montiert ist.

2. Vorrichtung nach Anspruch 1, die statische und lineare Führungsmittel (8) aufweist, mit denen mindestens ein Tisch (3) gleitend gekoppelt ist, der in Bezug auf den Rahmen (2) beweglich ist.

3. Vorrichtung nach Anspruch 2, wobei die Führungsmittel eine Vielzahl von Ständern (8) aufweisen, beispielsweise mindestens drei oder vier Ständer, mit denen jeweils mindestens eine erste Führungsbuchse (9) gleitend gekoppelt ist, die einstückig mit dem ersten Tisch (3) ausgebildet ist, und mindestens eine zweite Führungsbuchse (10) gleitend gekoppelt ist, die einstückig mit dem zweiten Tisch (4) ausgebildet ist.

4. Vorrichtung nach Anspruch 2 oder 3, wobei die Führungsmittel seitlich außerhalb einer peripheren Kante des beweglichen Tischs (3) und/oder seitlich außerhalb eines Bereiches des beweglichen Tischs (3) ausgebildet sind, der dazu vorgesehen ist, die Formhälfte (S1) aufzunehmen, die dem beweglichen Tisch zuordenbar ist.

5. Vorrichtung nach einem der vorhergehenden Ansprüche, wobei das zweite Teil mindestens ein Hakenelement (11) aufweist, das ausgebildet ist, um mit dem ersten Teil zu kuppeln, wobei das Hakenelement (11) die Möglichkeit hat, eine Eingriffsposition anzunehmen, in der es in das erste Teil einhaken kann, wenn die beiden Tische (3; 4) in der relativen Kupplungsposition sind, und einer Loslöseposition, in der es von dem ersten Teil losgelöst wird, wobei die Bewegung des Hakenelements (11) zwischen der Eingriffs- und Loslöseposition durch den mindestens einen Zugaktuator (7) angetrieben wird.

6. Vorrichtung nach Anspruch 5, wobei die Bewegung des Hakenelements (11) zwischen der Eingriffs- und Loslöseposition mindestens eine Drehung um einen Stift aufweist.

7. Vorrichtung nach Anspruch 5 oder 6, wobei das erste Teil einen Hakenbereich (12) aufweist, um das Hakenelement (11) aufzunehmen, wobei der Hakenbereich an einem Ende der Zugstange (6) ausgebildet ist, und wobei der Hakenbereich (12) vom Stift-in-Gabel-Typ, oder vom Ring- oder vom Augenschrauben-Typ ist.

8. Vorrichtung nach einem der vorhergehenden Ansprüche, wobei mindestens eine Zugstange (6) an dem ersten Tisch (3) montiert ist, mit der Möglichkeit einer Antriebsbewegung in die Richtung ihrer Längsachse, um ihre Relativposition in Bezug auf den ersten Tisch (3) einzustellen.

9. Vorrichtung nach einem der vorhergehenden Ansprüche, wobei jeder der beiden Tische (3; 4) einen zentralen Teil aufweist, der dazu vorgesehen ist, die entsprechende Formhälfte (S1; S2) aufzunehmen, und mindestens ein Plattenteil, das in auskragender Weise von dem zentralen Abschnitt hervorsteht, wobei jedes des ersten und zweiten Teils (6; 7) an dem Plattenteil des jeweiligen Tischs montiert ist.

10. Vorrichtung nach einem der vorhergehenden Ansprüche, wobei das erste Teil eine Vielzahl, beispielsweise mindestens drei oder vier, von Zugstangen (6) an dem ersten Tisch (3) aufweist, und wobei das zweite Teil eine Vielzahl, beispielsweise mindestens drei oder vier, von Zugaktuatoren (7) an dem zweiten Tisch (4) aufweist, wobei jeder Zugaktuator einer jeweilige Zugstange zugeordnet ist.

11. Verwendung einer Vorrichtung nach einem der vorhergehenden Ansprüche zum Thermoformen durch Ziehen von Platten, die aus einem Verbund von thermoformbaren Kunststoffen mit Verstärkungsfasern hergestellt sind.

## Revendications

1. Appareil de formage comprenant :
- un bâti (2) ;
- une première table (3) et une seconde table (4) destinées à recevoir respectivement, un premier demi-moule (S1) et un second demi-moule (S2) pour former une pièce de travail, au moins l'une desdites deux tables étant mobile par rapport audit bâti ;
- des premiers moyens d'entraînement (5) destinés à entraîner des déplacements relatifs desdites deux tables l'une par rapport à l'autre ;
- des seconds moyens d'entraînement (6 ; 7) destinés à exercer une force entre lesdites deux tables qui est apte à former la pièce de travail, lesdits seconds moyens d'entraînement ayant une première partie (6) montée sur une table et une seconde partie (7) montée sur l'autre table, lesdites première et seconde parties étant séparées l'une de l'autre lorsque lesdites deux tables sont à distance l'une de l'autre et étant couplables ensemble lorsque lesdits premiers moyens d'entraînement (5) amènent lesdites deux tables l'une vers l'autre dans une position de couplage relative ;
dans lequel ladite première partie comprend au moins une tige de traction (6) montée sur ladite première table (3) et ladite seconde partie comprend au moins un actionneur de traction (7) monté sur ladite seconde table (4).

2. Appareil selon la revendication 1, comprenant des moyens de guidage statiques et linéaires (8) avec lesquels ladite au moins une table (3) qui est mobile par rapport au bâti (2) est couplée de manière coulissante.

3. Appareil selon la revendication 2, dans lequel lesdits moyens de guidage comprennent une pluralité de colonnes (8), par exemple au moins trois ou quatre colonnes, à chacune desquelles au moins une première douille de guidage (9) est couplée de manière coulissante qui est solidaire de ladite première table (3) et au moins une seconde douille de guidage (10) est couplée de manière coulissante qui est solidaire de ladite seconde table (4).

4. Appareil selon la revendication 2 ou 3, dans lequel lesdits moyens de guidage sont agencés latéralement à l'extérieur d'un bord périphérique de ladite table mobile (3) et/ou latéralement à l'extérieur d'une zone de ladite table mobile (3) qui est destinée à recevoir le demi-moule (S1) qui est associable à ladite table mobile.

5. Appareil selon l'une quelconque des revendications précédentes, dans lequel ladite seconde partie comprend au moins un élément d'accrochage (11) agencé pour coupler avec ladite première partie, ledit élément d'accrochage (11) ayant la possibilité d'adopter une position d'engagement dans laquelle il peut accrocher ladite première partie lorsque les deux tables (3 ; 4) sont dans ladite position de couplage relative, et une position de désengagement dans laquelle il est décroché de ladite première partie, le mouvement dudit élément d'accrochage (11) entre lesdites positions d'engagement et de désengagement étant entraîné par ledit au moins un actionneur de traction (7).

6. Appareil selon la revendication 5, dans lequel le mouvement dudit élément d'accrochage (11) entre lesdites positions d'engagement et de désengagement comprend au moins une rotation autour d'un axe.

7. Appareil selon la revendication 5 ou 6, dans lequel ladite première partie comprend une zone d'accrochage (12) destinée à recevoir ledit élément d'accrochage (11), ladite zone d'accrochage étant agencée à une extrémité de ladite tige de traction (6), ladite zone d'accrochage (12) étant du type axe sur fourche, ou du type anneau ou piton.

8. Appareil selon l'une quelconque des revendications précédentes, dans lequel ladite au moins une tige de traction (6) est montée sur ladite première table (3) avec la possibilité de déplacement entraîné dans la direction de son axe longitudinal afin d'ajuster la position relative de celle-ci par rapport à ladite première table (3).

9. Appareil selon l'une quelconque des revendications précédentes, dans lequel chacune desdites deux tables (3 ; 4) comprend une portion centrale qui est destinée à recevoir le demi-moule correspondant (SI ; S2) et au moins une portion d'étagère faisant saillie en porte-à-faux de ladite portion centrale, chacune desdites première et seconde parties (6 ; 7) étant montée sur la portion d'étagère de la table respective.

10. Appareil selon l'une quelconque des revendications précédentes, dans lequel ladite première partie comprend une pluralité de, par exemple au moins trois ou quatre, tiges de traction (6) sur ladite première table (3), et dans lequel ladite seconde partie comprend une pluralité de, par exemple au moins trois ou quatre, actionneurs de traction (7) sur ladite seconde table (4), chaque actionneur de traction étant associé à une tige de traction respective.

11. Utilisation d'un appareil selon l'une quelconque des revendications précédentes pour le thermoformage avec emboutissage de feuilles réalisées en plastique thermoformable composite à fibres de renfort.
